# FASCICULE DE BREVET EUROPEEN

(11) **EP 3 366 009 B1**
(45) Date de publication et mention de la délivrance du brevet: **27.11.2019**
(21) Numéro de dépôt: 16791659.2
(22) Date de dépôt: 13.10.2016
(51) Int. Cl.: H04L 12/28, H04L 29/08, H04L 12/24, H04B 7/185, H04L 12/64, H04L 12/707, H04L 12/66, H04L 12/54, H04L 29/14

(54) **PROCÉDÉ DE CONTINUITÉ DE SERVICES FOURNIS PAR UNE PASSERELLE RÉSIDENTIELLE**
DURCH RESIDENTIAL GATEWAY BEREITGESTELLTES DIENSTKONTINUITÄTSVERFAHREN
SERVICE CONTINUITY METHOD PROVIDED BY A RESIDENTIAL GATEWAY

(30) Priorité: 23.10.2015 FR 1560158
(43) Date de publication de la demande: 29.08.2018
(73) Titulaire: Orange, 75015 Paris (FR)
(72) Inventeur: BOUCADAIR, Mohamed, 35830 Betton (FR); BINET, David, 35590 La Chapelle Thouarault (FR)
(86) Numéro de dépôt international: PCT/FR2016/052644
(87) Numéro de publication internationale: WO 2017/068263

(56) Documents cités:
- EP-A1- 2 273 763
- WO-A1-2010/044714
- WO-A1-2015/121563

## Description

La présente invention concerne les services fournis par les passerelles résidentielles.

Plus particulièrement, l'invention concerne la restauration d'au moins un service de télécommunications auquel une passerelle résidentielle permet d'accéder, de manière à assurer une continuité de service en cas de panne. Par souci de brièveté, on dira ci-après qu'une passerelle est « en panne » lorsque qu'au moins un service auquel elle permet d'accéder en temps normal n'est plus accessible, ou lorsque la qualité d'au moins un service auquel elle permet d'accéder en temps normal est dégradée.

Le réseau IP (*Internet Protocol*) est désormais le support universel d'une multitude d'applications et de services, tels que la Voix sur IP (« Voice over IP », ou VoIP, en anglais) ou la télévision numérique (IPTV). C'est le réseau fédérateur adopté par les opérateurs de télécommunications pour mettre en œuvre leurs différentes offres de service. Depuis quelques années, cette démocratisation de l'Internet a fait du grand public l'une des cibles privilégiée des opérateurs de télécommunications, qui sont de plus en plus nombreux à se positionner sur ce segment de marché. Ce mouvement s'est accompagné du développement d'offres de services spécifiques adaptées à cette clientèle, mêlant plusieurs services exploitant ainsi les avantages du réseau IP. Parmi celles-ci, les offres dites multi-services, dont les offres dites « *Triple Play* » car proposant simultanément un accès à Internet, à des contenus vidéo (dont la diffusion de programmes télévisés) et à des services conversationnels (téléphonie sur IP), ont accaparé une part du marché croissante. Présentées la plupart du temps sous forme de forfaits, ces offres attirent en effet le grand public grâce à une richesse fonctionnelle accessible pour un prix raisonnable. Les opérateurs de télécommunications cherchent dès lors à se démarquer les uns des autres en augmentant et en diversifiant le nombre des services disponibles dans leurs « formules/forfait », afin de séduire puis fidéliser leurs clients grand-public, en particulier. A cet égard, tous les profils clients grand public constituent une cible marketing potentielle, des couples aux jeunes, en passant par les personnes d'un âge plus avancé.

L'un des facteurs communs aux offres de tous ces opérateurs est l'installation d'une passerelle résidentielle, souvent appelée « box », CPE (initiales des mots anglais « *Customer Premises Equipment* » signifiant « Equipement de la Résidence d'un Client »), ou HG (initiales des mots anglais « *Home Gateway* » signifiant « Passerelle Domestique »), et que l'on appellera souvent « passerelle » ci-après. Cet équipement, installé chez un client (qui peut être un particulier ou une entreprise) d'un opérateur de télécommunications ou d'un fournisseur de services, est l'élément d'interconnexion permettant d'accéder aux services souscrits par le client, et aux applicatifs utilisés par le client ou par l'opérateur pour des fins de gestion et de supervision. En effet, il représente, comme son nom l'indique, une véritable passerelle entre, d'une part, le réseau de l'opérateur ou le fournisseur de services, et d'autre part le réseau local d'un client :
- en termes de connectivité - la passerelle résidentielle est raccordée au réseau (ou aux réseaux) de l'opérateur d'un côté, et fournit côté client un ensemble d'interfaces variées, par exemple une interface sans-fil telle que WLAN (initiales des mots anglais « *Wireless Local Area Network* » signifiant « Réseau Local Sans-fil ») ou Bluetooth, une prise RJ11 pour la téléphonie, des prises RJ45 pour la télévision numérique et les ordinateurs, ou des prises USB (*Universal Serial Bus*) ;
- en termes de services - elle permet de gérer l'ensemble des services souscrits par le client, ainsi que les fonctions qui permettent d'accéder à ces services : téléphonie, télévision, connexion Internet, équipements qui lui sont connectés, règles de NAT (initiales des mots anglais « *Network Address Translator* » signifiant « Traducteur d'Adresse Réseau »), règles de pare-feu, et ainsi de suite ;
- en termes d'applicatifs - elle comprend par exemple des logiciels spécifiques à l'opérateur pour la fourniture des services à ses clients, le diagnostic, ou la gestion automatique de mises à jour logicielles.

Par souci de brièveté, on dira ci-après qu'une passerelle « fournit » un service de télécommunications à l'utilisateur de cette passerelle, lorsque la passerelle permet à l'utilisateur *d'accéder* à ce service.

Malgré leur présence de plus en plus répandue au sein des foyers grand-public, ces passerelles restent pour la plupart de leurs utilisateurs des équipements mal maîtrisés, voire « mystérieux ». Pire, la majorité des utilisateurs, une fois la passerelle installée lors de la souscription du service (si tant est que c'est le client qui procède lui-même à cette installation), n'intervient plus sur cet équipement. De fait, ces passerelles représentent de manière générale des sortes de « boîtes noires » méconnues de leurs utilisateurs, alors qu'elles sont le nœud central qui permet d'accéder à l'ensemble des services qu'ils utilisent quotidiennement.

Cette méconnaissance conduit même à un certain dédain pour cet équipement, souvent considéré comme un surcoût inutile (la passerelle étant louée au client la plupart du temps), ou comme un équipement à redémarrer électriquement en cas de problème affectant l'un des services fournis par cet équipement.

La plupart des passerelles disposent d'une interface Web de configuration et de gestion, accessible de manière protégée via HTTP (*HyperText Transfer Protocol*). Cette interface est accessible via une URL (*Uniform Resource Locator*) qui peut prendre la forme d'une adresse prédéfinie (l'adresse IPv4 « 192.168.1.1 » ou un nom de service spécifique comme « MaBox », par exemple) ; un identifiant et un mot de passe sont généralement requis pour y accéder en mode « administrateur ». Une fois authentifié, le client (utilisateur) peut alors avoir accès à un certain nombre d'outils lui permettant d'agir directement sur les services et connexions gérées par sa passerelle. Or cette interface d'administration de la passerelle est peu connue de la plupart des clients. De plus, pour en tirer profit, le client doit être généralement familier des termes techniques utilisés pour la description de ces services, sinon il ne pourra pas prévoir exactement l'impact des modifications qu'il apporte au travers de l'interface d'administration.

En d'autres termes, l'accès aux éléments de gestion (même basiques) de la passerelle requiert de la part des clients grand-public un minimum de connaissances, réduisant *de facto* le nombre de clients capables d'exploiter ces capacités fonctionnelles. Ce qui peut apparaître du point de vue de l'opérateur comme un gage de sécurité (le risque pour des personnes ayant peu de connaissances de compromettre le système étant réduit), empêche en même temps ces personnes de disposer de moyens de contrôle sur les fonctions simples de la passerelle.

Cette méconnaissance est d'autant plus dommageable qu'une meilleure connaissance de la passerelle permettrait assurément aux clients de mieux maîtriser le fonctionnement des services auxquels ils ont souscrit, minimisant ainsi la nécessité de faire appel au service d'assistance technique (« *hotline* » en anglais) en cas de dysfonctionnement constaté (par exemple, lorsque l'utilisateur d'une passerelle ne peut plus accéder à au moins un service de télécommunications accessible en temps normal via la passerelle, ou lorsque le niveau de qualité d'au moins un service normalement accessible via la passerelle est dégradé par rapport au niveau nominal). En effet, la plupart des fonctions basiques voire avancées sont directement gérables sur la passerelle. Malheureusement, la majorité des clients grand-public ne dispose pas de connaissances suffisantes pour pouvoir gérer directement ces fonctions, ce qui entraîne un accroissement des appels au service d'assistance technique en cas de dysfonctionnement constaté, alors que certains de ces dysfonctionnements peuvent facilement être résolus en intervenant directement sur la passerelle. Si l'on considère le coût de gestion des services d'assistance technique pour les opérateurs et fournisseurs de services, sans tenir compte de l'impact sur leur image (temps d'attente, coût des appels), il est important de mettre en place des solutions efficaces pour réduire le nombre de sollicitations auprès des services d'assistance technique des opérateurs et fournisseurs de services.

Les systèmes de restauration de service actuellement à disposition de la clientèle grand-public présentent notamment les limitations suivantes :
- la gestion des pannes impose au client d'appeler l'opérateur ou le fournisseur de services pour signaler une dégradation ou une indisponibilité du service ; de plus, si la passerelle est devenue incapable de se raccorder au réseau et si la ligne téléphonique du client est raccordée à la passerelle (cas de
- la Voix sur IP), cette ligne téléphonique devient indisponible, de sorte que le client ne peut pas l'utiliser pour appeler le service d'assistance technique ;
- les clients ne savent pas si l'opérateur a entrepris des actions pour résoudre des pannes impactant un service auquel ils ont souscrit ;
- les délais de résolution de pannes ne sont pas connus à l'avance ; et
- le service est indisponible pendant la période de résolution d'une panne par l'opérateur ou le fournisseur de services ; on notera à cet égard que certains opérateurs mettent actuellement en place une procédure de prêt d'équipement (par exemple, une « clé 3G ») pour permettre à certains clients de continuer d'accéder à l'Internet ; cette approche commerciale a plusieurs inconvénients, par exemple le fait que le client doit se rendre en boutique, ou que le client n'accède pas forcément à l'intégralité des services auxquels il a souscrit : en effet, il ne dispose ainsi que des services résultant directement de l'accès à Internet ; en particulier, l'accès au service de télévision numérique (IPTV) n'est pas garanti.

Le document WO 2010/044714 décrit une passerelle résidentielle fournissant une interface de secours vers un réseau externe.

Le document EP 2 273 763 décrit un système et un procédé de détection d'une perte de liaison entre une passerelle de communication et un service applicatif.

Le document WO 2015/121563 décrit une technique d'aide au diagnostic à distance d'une passerelle d'accès.

La présente invention concerne donc un procédé de continuité de services, comprenant une étape de détection d'une panne consistant en ce qu'au moins un service auquel une passerelle résidentielle permet normalement d'accéder n'est plus accessible ou en ce que la qualité d'au moins un service auquel une passerelle résidentielle permet normalement d'accéder est dégradée. Ledit procédé est remarquable en ce qu'il comprend ensuite les étapes suivantes :
a) un centre de supervision sélectionne au moins un relais mobile,
b) ledit centre de supervision communique au relais mobile sélectionné au moins une instruction destinée à assurer la continuité dudit service,
c) ledit relais mobile établit une association de session avec ladite passerelle ou avec un dispositif intermédiaire, et
d) le trafic relatif audit service est redirigé vers le relais mobile.

On notera que l'invention s'applique à tout type de relais mobile. Naturellement, un opérateur peut utiliser simultanément différents types de relais mobiles pour bâtir une architecture de secours, ou en complément de l'infrastructure réseau de l'opérateur.

Selon un premier exemple, ledit relais mobile peut être un drone. Initialement développés à des fins militaires, les drones connaissent depuis quelques années un grand succès dans le domaine des services de surveillance ou de contrôle. Or les auteurs de la présente invention ont réalisé que cette technologie pouvait également présenter un grand intérêt dans le domaine des télécommunications et de fourniture de services numériques. En effet, comme décrit en détail ci-dessous, une architecture reposant sur une flotte de drones peut être utilisée pour assurer un accès de secours aux services IP auxquels un client a souscrit, en remplacement, voire en complément, de l'architecture réseau normale. Avantageusement, une flotte de drones peut être déployée très rapidement aux endroits souhaités.

Selon un deuxième exemple, ledit relais mobile peut être un véhicule autonome, c'est-à-dire un véhicule sans chauffeur (« *self-drive car* » en anglais). En effet, les auteurs de la présente invention ont réalisé que l'on pouvait, compte tenu de l'avènement de véhicules équipés d'émetteurs/récepteurs radio et d'équipements de collecte de données (tels que des capteurs ou des systèmes de géolocalisation efficaces), envisager d'utiliser des véhicules autonomes (tels que des voitures ou des camionnettes) comme relais mobiles.

Grâce à ces dispositions, une passerelle résidentielle peut continuer à rendre le, ou les services auxquels l'utilisateur de cette passerelle a souscrit, lorsque des évènements de différente nature ont pour effet de dégrader le niveau de qualité associé à un service auquel la passerelle résidentielle permet d'accéder. L'invention garantit ainsi la continuité d'un ou plusieurs services lors de pannes localisées dans les passerelles (y compris lorsque la panne affecte un organe principal de la passerelle) ou dans leur voisinage (notamment le réseau local domestique).

L'invention permet également de répondre à des contraintes d'ingénierie réseau qui, au lieu de concerner une défaillance localisée sur le segment de raccordement client, concernent d'autres besoins de l'opérateur, tels que la défaillance d'un nœud du réseau d'accès, ou la nécessité d'absorber une surcharge observée ou prévue sur une partie du réseau, ou encore l'exécution d'opérations d'entretien planifiées.

On notera que les moyens de continuité de services selon l'invention n'impliquent, avantageusement, aucune intervention de la part du client. On peut bien sûr, à titre optionnel, tenir le client informé de l'évolution du traitement de la panne, tout en s'assurant que les procédures de détection et de résolution de pannes restent transparentes pour le client. Quoiqu'il en soit, l'invention améliore sensiblement l'expérience et la satisfaction des clients.

Selon des caractéristiques particulières, ladite association de session est réalisée à l'aide :
- d'un identifiant de secours qui est diffusé par ledit relais mobile, et qui est écouté et reconnu par ladite passerelle résidentielle ou par ledit dispositif intermédiaire, ou
- d'un identifiant de secours qui est diffusé par ladite passerelle résidentielle ou par ledit dispositif intermédiaire, et qui est écouté et reconnu par ledit relais mobile.

Grâce à ces dispositions, une passerelle en panne (ou un dispositif intermédiaire) peut initialiser automatiquement une association de session avec un relais mobile situé à proximité de cette passerelle.

Selon d'autres caractéristiques particulières, suite à ladite étape b), ledit centre de supervision ajuste la position géographique dudit relais mobile en fonction de la position géographique de la, ou des passerelles dont ce relais mobile assure la continuité de services.

Grâce à ces dispositions, on optimise ladite association de session, et l'on minimise la perturbation causée aux connexions en cours.

Corrélativement, selon un deuxième aspect, l'invention concerne divers dispositifs.

Elle concerne ainsi, premièrement, un relais mobile. Ledit relais mobile est remarquable en ce qu'il comprend des moyens pour, suite à la détection d'une panne consistant en ce qu'au moins un service auquel une passerelle résidentielle permet normalement d'accéder n'est plus accessible ou en ce que la qualité d'au moins un service auquel ladite passerelle permet normalement d'accéder est dégradée :
- recevoir de la part d'un centre de supervision au moins une instruction destinée à assurer la continuité dudit service,
- ajuster au besoin sa position géographique en fonction de la position géographique de la passerelle,
- établir une association de session avec la passerelle ou avec un dispositif intermédiaire entre lui-même et la passerelle, et
- prendre en charge le trafic relatif audit service.

Selon des caractéristiques particulières, ledit relais mobile comprend en outre des moyens pour diffuser un identifiant de secours.

Selon d'autres caractéristiques particulières, ledit relais mobile comprend en outre des moyens pour écouter et reconnaître un identifiant de secours diffusé par ladite passerelle résidentielle ou par ledit dispositif intermédiaire.

Comme mentionné plus haut, ledit relais mobile pourra avantageusement être embarqué dans un drone ou dans un véhicule autonome.

L'invention concerne aussi, deuxièmement, une passerelle résidentielle. Ladite passerelle résidentielle est remarquable en ce qu'elle comprend des moyens pour, suite à la détection d'une panne consistant en ce qu'au moins un service auquel ladite passerelle permet normalement d'accéder n'est plus accessible ou en ce que la qualité d'au moins un service auquel elle permet normalement d'accéder est dégradée, établir une association de session avec un relais mobile comprenant des moyens pour ajuster au besoin sa position géographique en fonction de la position géographique de la passerelle, ou avec un dispositif intermédiaire entre la passerelle et ledit relais mobile, et lui transférer le trafic relatif audit service.

Selon des caractéristiques particulières, ladite passerelle résidentielle comprend en outre des moyens pour diffuser un identifiant de secours.

Selon d'autres caractéristiques particulières, ladite passerelle résidentielle comprend en outre des moyens pour écouter et reconnaître un identifiant de secours diffusé par ledit relais mobile.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de continuité de services succinctement exposé ci-dessus, lorsqu'il est exécuté sur un ordinateur.

Selon un troisième aspect, l'invention concerne un système de continuité de services comprenant au moins un relais mobile tel que décrit succinctement ci-dessus, et au moins une passerelle résidentielle telle que décrite succinctement ci-dessus.

Les avantages offerts par ce système sont essentiellement les mêmes que ceux offerts par le procédé de continuité de services décrit succinctement ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 illustre l'utilisation, pour permettre à un utilisateur d'une passerelle en panne de communiquer avec un correspondant connecté à Internet, d'un unique drone recevant ses instructions via le réseau auquel est connectée ladite passerelle,
- la figure 2 illustre l'utilisation, pour permettre à un utilisateur d'une passerelle en panne de communiquer avec un correspondant connecté à Internet, d'un drone faisant partie d'une flotte de deux drones et recevant ses instructions via le réseau auquel est connectée ladite passerelle,
- la figure 3 illustre l'utilisation, pour permettre à un utilisateur d'une passerelle en panne de communiquer avec un correspondant connecté à Internet, d'un drone recevant ses instructions via un autre réseau que celui auquel est connectée ladite passerelle,
- la figure 4 illustre l'utilisation d'un premier drone pour permettre à un utilisateur d'une passerelle en panne de communiquer avec un correspondant connecté à Internet, et d'un deuxième drone pour assurer la continuité du service IPTV de ladite passerelle,
- la figure 5 illustre l'utilisation, pour permettre à un utilisateur d'une passerelle en panne de communiquer avec un correspondant connecté à Internet, d'une chaîne de trois drones,
- la figure 6 illustre l'utilisation d'un chemin nominal pour permettre à un utilisateur d'une passerelle de communiquer avec un correspondant connecté à Internet, et, simultanément, d'un drone pour assurer la continuité du service IPTV de ladite passerelle,
- la figure 7 illustre l'enregistrement conformément au protocole SIP d'un client auprès d'une plateforme de service de téléphonie via un drone relais,
- la figure 8 illustre l'établissement conformément au protocole SIP d'une communication téléphonique via un drone relais,
- la figure 9 illustre l'utilisation d'un drone pour permettre la mise en relation en VoIP de clients d'une même zone géographique, en cas d'indisponibilité d'une plateforme de service VoIP, et
- la figure 10 illustre la diffusion d'un contenu vidéo à un client à partir d'un drone, en cas de panne d'une plateforme de service IPTV.

Comme expliqué succinctement ci-dessus, l'invention enrichit les capacités et l'intelligence d'une passerelle résidentielle afin d'assurer, en cas de panne (telle que définie ci-dessus) de cette passerelle, la continuité de services via au moins un relais mobile. Les passerelles doivent naturellement être configurées pour mettre en œuvre l'invention ; cette configuration peut être effectuée de manière statique ou dynamique, par exemple à l'aide de protocoles tels que DHCP (Dynamic Host Configuration Protocol) ou TR-69 (CPE WAN Management Protocol).

On va décrire à présent un mode de réalisation du procédé de continuité de services selon l'invention. A titre d'exemple, on considérera ci-dessous que les relais mobiles sont des drones.

Sur les figures, décrites ci-dessous, illustrant ce mode de réalisation, des notations identiques désignent des objets identiques ou analogues.

Selon une étape E1, une entité réseau détecte une panne concernant une passerelle connectée au réseau. On notera que plusieurs services peuvent être simultanément défaillants. Notamment, la panne d'un service aura pour conséquence l'indisponibilité de tous les services reposant sur le service défaillant : par exemple, l'indisponibilité du service d'accès à Internet peut empêcher la communication de messages électroniques et l'établissement de communications téléphoniques.

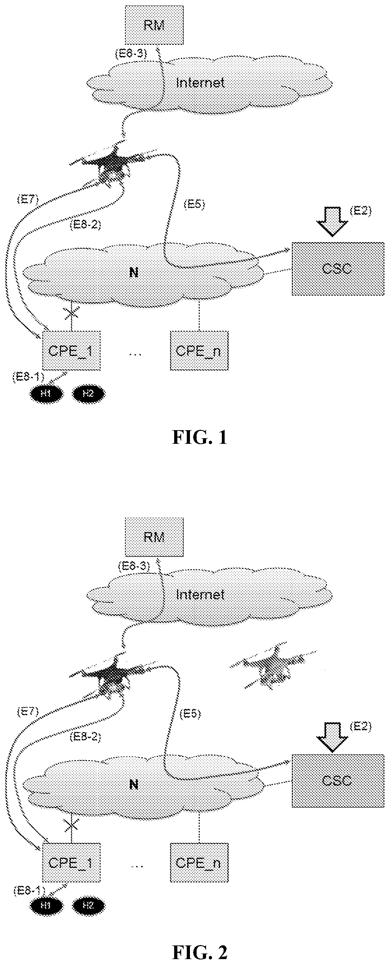

La figure 1 montre des passerelles CPE_1, CPE_2, ..., CPE_n, connectées à un réseau N. La passerelle CPE_1 assure normalement l'accès à des services de télécommunications à des machines désignées par H1 et H2. On suppose ici qu'une panne affecte au moins un service souscrit par l'utilisateur de la machine H1, par exemple la communication entre cet utilisateur et un correspondant RM (initiales des mots anglais « *Remote Machine* » signifiant « Machine Distante ») connecté à Internet.

Selon une étape E2, au moins un centre de supervision, que l'on appellera serveur « CSC » (initiales des mots anglais « *CPE Supervision Center* » signifiant « Centre de Supervision de Passerelles ») est informé de ladite panne. On notera, dans le cadre de la présente invention, le terme de « serveur » désigne une entité logique qui est fonctionnellement responsable de recevoir des requêtes, prendre des décisions et répondre aux requêtes ; aucune structure d'appareil particulière, ou architecture réseau particulière, n'est impliquée par l'utilisation de ce terme.

Le serveur CSC peut être décomposé en plusieurs fonctions élémentaires qui peuvent être hébergées par un même nœud de réseau, ou être distribuées sur plusieurs nœuds.

On notera également que l'on peut mettre en place, dans un réseau d'opérateur, un seul serveur CSC ou plusieurs. On peut par exemple placer un serveur CSC dans le réseau en amont de la passerelle, et en embarquer un autre dans un drone.

Selon une première variante, ladite entité réseau qui a détecté la panne est directement associée à un serveur CSC. C'est notamment le cas lorsque la « panne » est en fait une indisponibilité due à une opération d'entretien planifiée sur des lignes impactant cette passerelle.

Selon une deuxième variante, ladite entité réseau qui a détecté la panne n'est pas directement associée à un serveur CSC. Il peut s'agir par exemple d'une entité réseau connectée à des organes de supervision, ou d'une entité réseau qui a reçu soit une notification explicite envoyée par la passerelle, soit un ticket d'incident envoyé par un autre élément du réseau de l'opérateur. Dans ce cas, cette entité réseau qui a détecté la panne envoie au moins un rapport de panne à au moins un serveur « CSC ». Ce, ou ces rapports de panne contiennent des informations concernant la panne, telles que l'identité du client, le ou les types de services en panne, un identifiant de la passerelle, par exemple son adresse MAC (Media Access Control), ou la position géographique de la passerelle.

Selon une étape E3, un serveur CSC qui détecte la panne ou qui est informé de la panne détermine, sur la base des informations remontées, si l'incident constaté peut être résolu rapidement, par exemple au moyen d'un équipement de raccordement, ou d'un service dit « OS » ou « *daemon* » (on appelle ainsi un processus logiciel activé par la passerelle), ou d'un redémarrage d'une interface réseau, ou encore de l'installation d'une nouvelle configuration sur la passerelle (installation pouvant d'ailleurs être activée par un relais mobile, après association de ce relais mobile avec la passerelle et exécution des commandes adéquates).

Au moins dans le cas où l'incident constaté ne peut être résolu de cette manière, le serveur CSC, selon une étape E4, initialise les opérations adéquates pour résoudre l'origine de la défaillance, et met en œuvre le procédé de continuité de services selon l'invention pendant le temps que durera la résolution de l'incident par les équipes techniques, ou pendant le temps nécessaire pour fournir au client une autre solution de secours ; cette solution de secours peut consister par exemple en la fourniture et la mise en œuvre d'une clé USB (« *dongle* » en anglais), telle qu'une clé 3G, une clé Wi-Fi ou une clé TV à installer sur la passerelle ou un autre équipement tel qu'un ordinateur ou un téléviseur.

Sur la base de la position géographique de la ligne concernée, et/ou des informations présentes dans les bases de données des opérateurs proposant les informations de configuration des clients ou de l'élément réseau défaillant, ainsi que d'autres informations (par exemple les charges de trafic des drones en service, ou les niveaux d'alimentation électrique des drones), le serveur CSC exécute tout d'abord un algorithme de sélection du drone, ou des drones, qui sera, ou seront, en charge d'assurer la continuité de services.

Pour ce faire, le serveur CSC dispose d'un inventaire à jour de la flotte de drones en service. Cette flotte peut comprendre un seul drone (cf. figure 1) ou plusieurs (cf. **figure** 2). De plus, le serveur CSC maintient une base de données (par exemple associée à une carte géographique) qui enregistre la localisation des drones en service. Un drone de la flotte est en état « actif» lorsqu'il est impliqué dans au moins une procédure de continuité de services, ou en état « passif » lorsqu'il est en attente d'instructions de la part d'un serveur CSC. De préférence :
- chacun des drones actifs envoie régulièrement au serveur CSC sa position géographique, ainsi que d'autres informations telles que la charge disponible ou la disponibilité des services de secours pour lesquels il est configuré, et
- un drone en mode « passif » peut effectuer des rondes indiquées par le CSC, ou rejoindre systématiquement une position optimale qui lui permet d'intervenir rapidement au sein d'une zone prédéfinie.

Les drones peuvent embarquer des mécanismes de reconnaissance géographique pour faciliter la localisation de lieux de stationnement. Aussi, ces lieux peuvent être prédéterminés par un serveur CSC.

Un serveur CSC peut sélectionner les drones selon des critères prédéterminés, tels que des zones d'intervention prédéfinies, ou selon les types de clients (par exemple, clients professionnels vs. clients non-professionnels), ou encore selon le service défaillant, ou encore selon les caractéristiques intrinsèques des drones (telles que leur capacité de communication ou leur autonomie).

A noter que le relais mobile, en plus d'assurer la continuité de services, peut au besoin recevoir de la part d'un serveur CSC l'instruction de livrer un *dongle*, voire une passerelle de rechange, à un client.

Le serveur CSC maintient aussi un état de l'alimentation électrique des drones, des opérations d'entretien planifiées pour chacun des drones, de leur charge, des passerelles en panne raccordées via chacun des drones, et des services fournis ; un drone peut par exemple jouer le rôle de Proxy SIP (Session Initiation Protocol), Proxy MLD (Multicast Listener Discovery), ou Proxy IGMP IGMP (Internet Group Management Protocol).

Le serveur CSC peut choisir un drone actif ou passif (tels que définis ci-dessus). S'il choisit un drone actif, il s'assure de préférence des capacités du drone en termes de charge (et, optionnellement, de fonctions de sécurité et/ou de Qualité de Service) si le drone doit assurer la connexion à plusieurs clients ; de plus, il peut ajuster la position géographique dudit drone de manière à minimiser la perturbation causée aux connexions en cours, ledit ajustement se traduisant en un déplacement du drone vers une nouvelle position tout en assurant la continuité des sessions actives.

L'algorithme de sélection de drones et d'ajustement de leur position géographique de ceux-ci peut être mis en œuvre d'une manière distribuée pour éviter d'utiliser un serveur de calcul centralisé.

L'algorithme de sélection du drone peut aussi prendre d'autres paramètres d'entrée, tels que la localisation de la passerelle en panne, la localisation des drones, la charge actualisée des drones, ou le service défaillant concerné. A titre d'exemple, le serveur CSC peut sélectionner le drone dont la distance à parcourir, pour attendre la position cible, est optimale. Ce critère permet de secourir la passerelle en panne et de lui proposer un accès aux services IP le plus rapidement possible.

Le serveur CSC peut coordonner la procédure de synchronisation entre deux drones de la flotte afin d'anticiper une insuffisance de batterie ou toute autre défaillance propre à un drone actif. Ainsi, un drone peut prendre le relais d'un autre drone actif. Une fois la procédure de relais exécutée, le premier drone passe alors à l'état passif.

Selon une étape E5, le serveur CSC communique au drone sélectionné au moins une instruction concernant, par exemple, les coordonnées GPS (Global Positioning System) de l'endroit où il doit se rendre, le client concerné, un ou plusieurs identifiants (par exemple, adresse MAC) de passerelles ou de *dongles*, les identifiants des services concernés, ainsi que d'autres informations utiles.

Le message utilisé pour véhiculer ces instructions sera appelé « ACTION() ». Le serveur CSC peut aussi utiliser un message ACTION() pour demander à un drone de se rendre à une base d'entretien de la flotte, ou de se mettre en attente de nouvelles instructions de la part du serveur CSC.

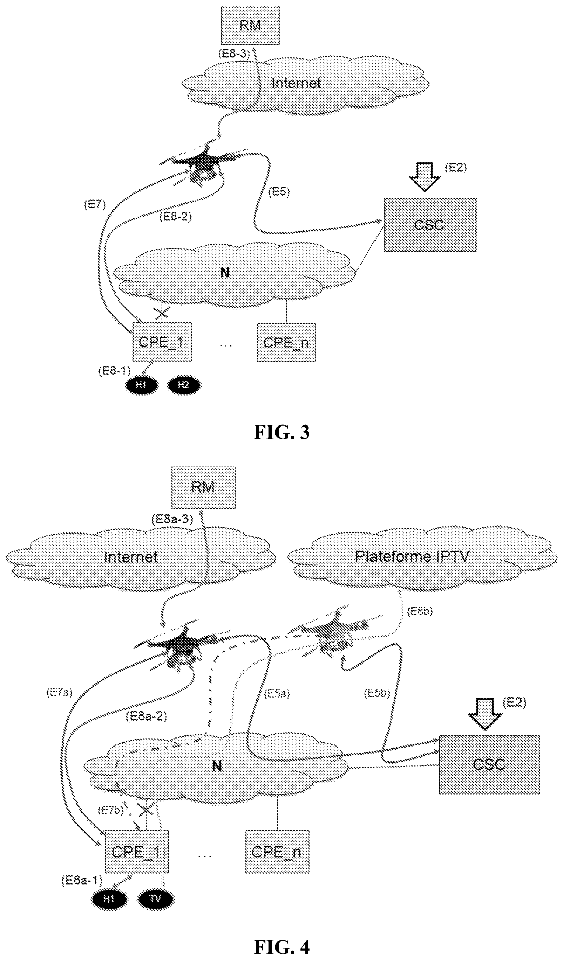

Comme illustré sur la figure 1, la communication entre le serveur CSC et les drones peut être établie via le même réseau que celui utilisé pour servir les clients. En variante, comme illustré sur la **figure 3**, la communication entre le serveur CSC et les drones peut être établie via un autre réseau que celui utilisé pour servir les clients. Ce réseau peut être un réseau IP ou un réseau mettant en œuvre une autre technologie, par exemple une technologie WLAN, satellite ou LTE (« Long-Term Evolution », également connue sous le nom de 4G). Cette variante permet particulièrement de pallier des problèmes d'infrastructure plus importants, et d'intervenir sur des problèmes où les infrastructures terrestres sont en péril (par exemple, un tremblement de terre ou un accident nucléaire) ; lors de ces évènements exceptionnels, on peut mettre en œuvre l'invention pour acheminer le trafic prioritaire (par exemple, les appels d'urgence), ou l'ensemble du trafic.

De préférence, une phase d'authentification mutuelle entre un serveur CSC et les drones de la flotte est mise en place. Cette procédure a pour objectif d'éviter l'utilisation malveillante des drones par un serveur non autorisé. Les drones ne doivent accepter de commandes que s'ils proviennent d'un serveur CSC authentifié. Par exemple, une liste d'accès peut être configurée dans chaque drone pour lui indiquer le/les serveur(s) CSC autorisé(s) à lui donner des instructions. Si une instruction provient d'un serveur quelconque ne faisant pas partie de la liste, un drone ne tiendra pas compte de cette instruction. Le drone peut optionnellement enregistrer dans un fichier les demandes de configuration non authentifiées, ou des instructions non autorisées. Des systèmes d'authentification et de confidentialité des échanges pourront être mis en œuvre pour améliorer la sécurité du procédé de continuité de services selon l'invention.

Sur réception d'une notification de panne ou de dégradation de service, un serveur CSC peut décider d'impliquer un ou plusieurs drones. Un même drone peut être utilisé pour tous les services. En variante, plusieurs drones peuvent être impliqués, chacun des drones pouvant prendre en charge un seul service, ou plusieurs services ; par exemple sur la **figure 4**, un premier drone assure la continuité du service Internet (désigné par (a) sur la figure 4) auquel accède la machine H1, et un deuxième drone assure la continuité du service de télévision numérique (désigné par (b) sur la figure 4).

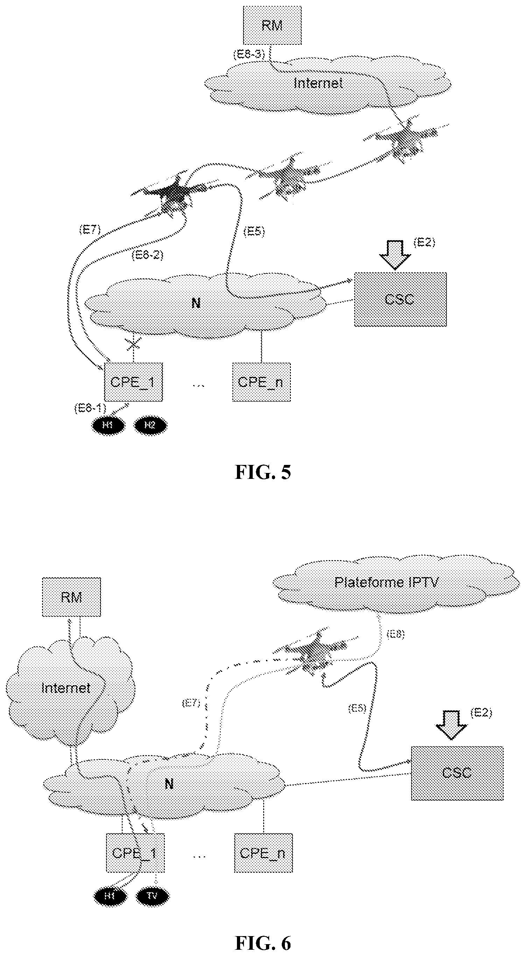

Les paramètres du message ACTION() peuvent être les suivants :
- « Codes » : indique le code de l'action ; voici quelques exemples :
   ∘ « 0 » : demande le retour dudit drone à une base d'entretien ; la localisation de la base d'entretien est renseignée par l'attribut « New Position » ;
   ∘ « 1 » : demande la prise en charge d'une passerelle en panne ;
   ∘ « 2 » : demande le basculement des contextes actifs vers un autre drone de la flotte ;
   ∘ « 3 » : demande un récapitulatif des contextes actifs ; ce code est utilisé pour des besoins de synchronisation des drones de la flotte ;
   ∘ « 4 » : demande la mise à jour de la table d'acheminement ; en effet, un drone peut relayer les messages reçus des passerelles en panne vers un autre drone ou vers un point de raccordement réseau, en utilisant par exemple un point d'accès WLAN, ou en passant par un réseau conforme à une norme 3G (UMTS) ou 4G (LTE) de la 3GPP (3rd Generation Partnership Project) ; la nouvelle table de routage (ou seulement une mise à jour) est aussi incluse dans le message ACTION() ; la **figure 5** illustre un cas où, les drones de la flotte étant configurés pour relayer le trafic des clients vers d'autres drones de la flotte, l'utilisateur de la machine H1 peut communiquer avec un correspondant RM connecté à Internet via une chaîne de trois drones ;
   ∘ « 5 » : demande au drone de purger ses filtres de contrôle d'accès (définis ci-dessous).
- « New Position » : indique la nouvelle position GPS où doit se rendre le drone.
- « ACL » : renseigne les filtres de contrôle d'accès à appliquer ; ce paramètre peut inclure une règle de contrôle d'accès sur la base d'une ou plusieurs adresses MAC, ou d'un login/mot de passe ; ce paramètre est optionnel ; il est utilisé pour identifier les passerelles en panne à prendre en charge par le drone.
- « Service Codes » : ce paramètre inclut l'identifiant du, ou des services concernés ; le drone relais ne prendra en charge que les services renseignés par ce paramètre ; les requêtes de raccordement pour des services non inclus sont rejetées par le drone ; les demandes rejetées peuvent être enregistrées dans un fichier dédié ; ce paramètre permet de renseigner un code, ou plusieurs codes ; voici quelques exemples de valeurs pouvant être prises par ce paramètre :
   ∘ « 0 » (ou « ANY ») : indique tous les services ;
   ∘ « 1 » : indique le service « Internet » ;
   ∘ « 2 » : indique le service « VoIP » ;
   ∘ « 3 » : indique le service « IPTV » ;
   ∘ « 4 » : indique le service « VoD » (initiales des mots anglais « *Video on Demand* » signifiant « Vidéo à la Demande ») ; et
   ∘ « 5 » : indique les services d'urgence.
- « Routing/Forwarding Entries » : renseigne une ou plusieurs entrées de la table de routage ; ce paramètre est renseigné si, par exemple, un message ACTION() avec le code « 4 » est envoyé à un drone.
- « Sub-Code » : renseigne une ou plusieurs actions spécifiques à l'opération identifiée par le paramètre « Codes » ; le paramètre Sub-Code peut par exemple être utilisé pour indiquer au drone qu'il doit activer une certaine configuration de la passerelle (Sub-Code 0), ou une mise à jour logicielle de la passerelle (Sub-Code 1).

La liste de paramètres ci-dessus n'est évidemment pas exhaustive ; d'autres paramètres peuvent être définis pour satisfaire de nouveaux besoins fonctionnels. Par ailleurs, la structure du message ACTION() décrite ci-dessus n'est fournie qu'à titre d'exemple ; d'autres formats peuvent être envisagés ; on peut ainsi définir des messages spécifiques pour chacune des opérations identifiées par le champ « Codes ».

Un CSC peut donner à un ou plusieurs drones des instructions visant une ou plusieurs actions à exécuter par ce ou ces drones sur la même passerelle. Ces actions peuvent être communiquées au drone ou aux drones à l'aide d'un ou plusieurs messages ACTION().

Selon une étape E6, le drone relais exécute les instructions du serveur CSC. Il peut par exemple :
- se positionner selon de nouvelles coordonnées GPS communiquées par le CSC ; un drone relais peut ajuster sa position pour prendre en charge une nouvelle passerelle en panne, tout en garantissant la continuité de services pour d'autres passerelles en panne ;
- activer les composantes de service concernées pour la passerelle en panne (par exemple, Internet/VoIP/IPTV, VoIP seulement, VoD seulement, VoIP et IPTV, ou Internet seulement) ;
- réveiller l'interface WLAN de la passerelle en panne, par exemple au moyen du protocole WoWLAN (Wake on Wireless LAN), afin de réduire le délai de rétablissement du service ; ou
- mettre à jour sa table de routage.

Selon une étape E7, le drone relais établit une association de session avec la passerelle en panne. En variante, on utilise un dispositif intermédiaire entre le drone et la passerelle ; autrement dit, le drone s'associe à un dispositif intermédiaire, et ce dispositif intermédiaire s'associe à la passerelle.

Diverses technologies de connexion peuvent être utilisées pour cette association, par exemple une technologie WLAN, LTE, GPRS (General Packet Radio Service), ou WIMAX (norme 802.16 de l'Institute of Electrical and Electronics Engineers).

De préférence, un identifiant de secours, dédié à la mise en œuvre de la présente invention, est configuré dans les drones et dans les passerelles mettant en œuvre l'invention.

Plus précisément, selon une première variante :
- un drone selon l'invention diffuse un identifiant de secours via l'interface correspondant à la technologie de connexion utilisée entre ce drone et au moins une passerelle ou un dispositif intermédiaire selon l'invention, et
- une passerelle ou un dispositif intermédiaire selon l'invention doit être capable de se comporter comme un terminal-client, c'est-à-dire que cette passerelle ou ce dispositif intermédiaire doit être capable d'établir une association de session avec un drone relais selon l'invention se comportant comme un point d'accès.

Selon une deuxième variante :
- une passerelle ou un dispositif intermédiaire selon l'invention diffuse un identifiant de secours via l'interface correspondant à la technologie de connexion utilisée entre cette passerelle ou ce dispositif intermédiaire et au moins un drone selon l'invention, et
- un drone selon l'invention doit être capable de se comporter comme un terminal-client, c'est-à-dire que ce drone doit être capable d'établir une association de session avec une passerelle ou un dispositif intermédiaire selon l'invention se comportant comme un point d'accès.

Naturellement, on pourra combiner ces deux variantes.

Une passerelle en panne, ou un dispositif intermédiaire, pourra ainsi initialiser automatiquement une association de session avec un drone situé à proximité de cette passerelle.

On notera que l'identifiant de secours selon l'invention ne doit pas être confondu avec le « SSID » utilisé classiquement par les points d'accès WLAN pour l'usage local ; on rappelle à cet égard que le « SSID » (initiales des mots anglais « *Service Set Identifier* » signifiant « Identifiant d'Ensemble de Service ») est le nom d'un réseau WLAN (communément appelé « Wi-Fi ») selon la norme IEEE 802.11, et qu'il est destiné à être « écouté » par les terminaux pour leur permettre (s'ils y sont autorisés) de se connecter à un point d'accès « Wi-Fi » diffusant un certain SSID.

Afin d'éviter toute association de session avec un dispositif usurpateur, les passerelles et les drones selon l'invention utilisent de préférence des clés d'association préconfigurées. Les clés d'association peuvent avoir une durée de vie limitée afin d'éviter une utilisation frauduleuse du système. L'opérateur peut utiliser des protocoles de configuration dynamique pour mettre à jour lesdites clés d'association.

Le drone relais utilise les filtres d'accès pour contrôler les passerelles aptes à se connecter à lui. Particulièrement, le drone exécute un filtre sur la base de l'adresse MAC communiquée par un serveur CSC.

Si l'association s'est déroulée avec succès, une adresse IPv4, un préfixe IPv6 ou les deux sont allouées par un drone relais à une passerelle en panne. La table de routage IP de la passerelle en panne est alors modifiée en conséquence.

Une fois l'association réalisée avec succès, le drone relais en informe le serveur CSC. Le client peut être notifié que le service qui était défaillant est désormais opérationnel. Quand la mise en œuvre de l'invention assure un niveau de service similaire au niveau nominal, on peut se dispenser de notifier le client, afin de rendre la détection et la résolution de panne aussi transparentes que possible aux clients.

Une fois l'association établie, selon une étape E8, la passerelle est désormais connectée au réseau. Tout le trafic de la passerelle en panne, ou du moins, celui du service concerné, est redirigé vers au moins un drone relais sélectionné par le serveur CSC, ce qui permet au client d'accéder aux services auxquels il a souscrit.

Ainsi, sur les figures 1, 2, 3 et 5, l'utilisateur de la machine H1 est mis en communication (liens E8-1, E8-2 et E8-3) avec son correspondant RM via un drone. Il en est de même sur la figure 4 (liens E8a-1, E8a-2 et E8a-3).

Dans le cas où un seul service est défaillant, les autres services étant opérationnels, le drone relais pourra être activé spécifiquement pour le service en question, les autres services utilisant le chemin nominal de fourniture de ce service. Ainsi, sur la **figure 6**, la continuité du service de télévision numérique (IPTV) met en œuvre un drone relais, cependant que le service Internet (auquel accède la machine H1) utilise un routage nominal.

Afin d'éviter le piratage des données et de préserver la confidentialité des échanges, le trafic envoyé vers un drone relais peut être chiffré. De préférence, l'utilisateur de la passerelle n'a pas le droit d'accéder aux paramètres de configuration de l'interface de continuité de services ; en particulier, l'utilisateur ne peut pas accéder aux clés d'association et/ou de chiffrement enregistrées localement.

L'adresse MAC de la passerelle en panne (ou tout autre identifiant unique de la passerelle tel qu'un numéro de série) est insérée dans les données émises par la passerelle en panne. L'adresse MAC permet d'identifier d'une manière non ambiguë la passerelle en panne quel que soit le drone relais utilisé. L'identifiant MAC peut être utilisé par le drone pour appliquer des politiques d'opérateur (par exemple, préserver la même adresse pour tout le trafic émis par une même passerelle en panne).

Quand la ligne principale redevient opérationnelle, ou quand l'opérateur fournit au client une autre solution de secours (par exemple, installation d'un *dongle* sur la passerelle), selon une étape E9, le CSC coordonne le retrait du drone relais. La passerelle utilise l'accès principal (ou nominal) pour acheminer les nouvelles sessions. Pour les sessions en cours, le drone relais peut être maintenu dans le chemin de communication, ou retiré si la session peut être transférée vers un chemin nominal sans problème de continuité de session ; en effet, retirer le drone peut avoir des conséquences négatives sur une session en cours si le système ne comprend pas de mécanismes aptes à notifier la machine distante de la disponibilité d'une autre adresse IP.

On va décrire à présent l'application de l'invention à deux types de services très répandus.

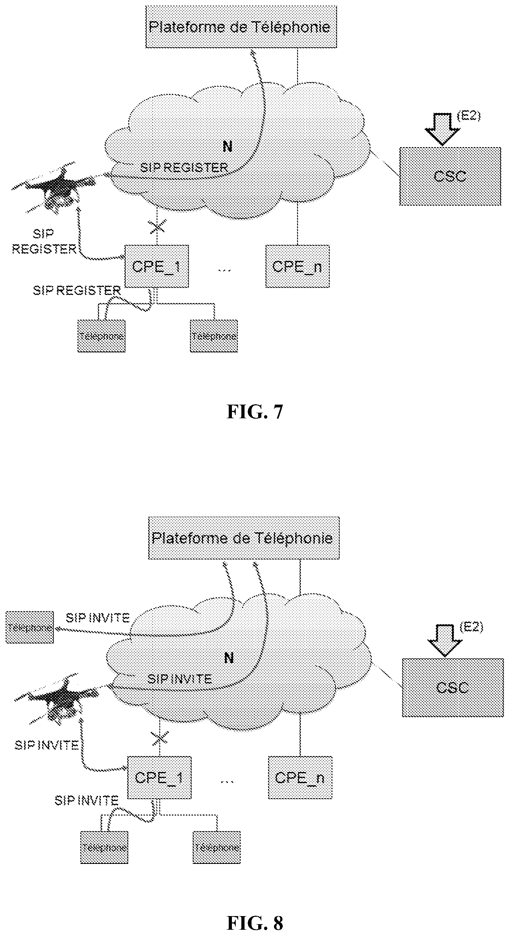

Pour assurer la continuité des services de Voix sur IP, la passerelle embarque une fonction mandataire, par exemple Proxy SIP, destinée à relayer les requêtes d'enregistrement (SIP REGISTER) (cf. **figure 7**) envoyés par un terminal VoIP vers une plateforme de service de téléphonie, via par exemple un SBC (Session Border Controller) ou un P-CSCF (Proxy-Call Session Control Function) ; ce sont ces messages de signalisation SIP qui conditionnent l'accès au service VoIP, c'est-à-dire qui permettent au client de s'enregistrer auprès du service, puis d'établir et de recevoir des appels. A noter que les identifiants de la ligne téléphonique restent ceux de la ligne téléphonique en panne, même lorsque l'on met en œuvre un drone relais.

La **figure 8** illustre un exemple d'établissement de communication téléphonique via un drone relais, dans lequel est acheminée une requête d'établissement de session (INVITE) conforme au protocole SIP. Mais l'invention s'applique tout aussi bien à d'autres protocoles de signalisation et d'échange de flux média que SIP, par exemple IAX, H.323 ou WebRTC.

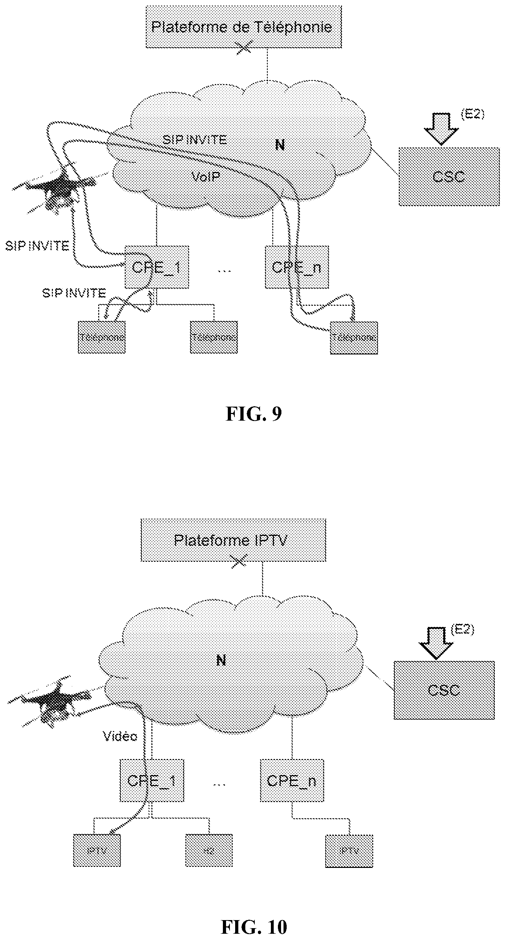

Comme illustré sur la **figure 9**, on peut, en cas d'indisponibilité d'une plateforme de service VoIP, utiliser un drone pour permettre la mise en relation en VoIP de clients appartenant à une même zone géographique. Ainsi, le drone embarque les fonctions de serveur d'enregistrement, de serveur mandataire (« *Proxy Server* »), ou de serveur d'annonce. Le drone pourra donc mettre en relation les clients pour établir des communications locales, relayer les communications vers un nœud d'interconnexion VoIP ou RTC (Réseau Téléphonique Commuté). Aux fins de cette mise en relation, le drone maintient une base d'enregistrements des clients sur la base des messages REGISTER qu'il traite localement.

Le drone peut être aussi configuré pour répondre à toute demande d'établissement d'appel par un message d'annonce audio. Ainsi, l'appelant peut être redirigé vers un server d'annonce diffusant un fichier audio, qui fournit par exemple des informations expliquant l'indisponibilité du service, ou invitant l'appelant à renouveler l'appel ultérieurement.

Pour assurer la continuité des services de télévision numérique, ou de Vidéo à la Demande (VoD), le drone embarque une fonction mandataire, par exemple proxy IGMP ou MLD, destinée à relayer les messages de souscription et de désabonnement à un service de diffusion de contenus IPTV (diffusion de programmes télévisés, notamment) envoyés par le récepteur/décodeur (« *Set Top Box* », ou STB en anglais) connecté à la passerelle vers l'équipement d'accès en charge de traiter ces messages de souscription/désabonnement ; ce sont ces messages de signalisation qui conditionnent l'accès au contenu IPTV désiré par le client, c'est-à-dire le programme télévisé auquel le client souhaite accéder. Le trafic correspondant est acheminé le long d'arbres de distribution calculés et établis selon le mode de transmission multicast IP. Chaque terminaison de l'arbre est située dans un équipement d'accès qui raccorde différents clients intéressés à recevoir le contenu.

Lorsqu'une panne survient sur la ligne de raccordement du client au réseau, le trafic de signalisation est redirigé vers un drone relais qui embarque la fonction mandataire idoine. La fonction proxy du drone relais se charge alors de relayer les nouvelles demandes de souscription ou de désabonnement à un service de diffusion de contenus IPTV émises par le ou les récepteur(s) IPTV connectés à la passerelle en panne. Ces demandes seront traitées par l'équipement d'accès auquel le drone relais est connecté. Une fois la demande de souscription traitée, le trafic caractéristique du contenu IPTV demandé est acheminé par l'équipement d'accès vers le drone relais, lequel le transmet à la passerelle dont la ligne de raccordement est hors service, qui, enfin, se charge de l'acheminer au récepteur IPTV.

Optionnellement, un drone peut embarquer un serveur d'annonce chargé de diffuser des informations vidéo/audio en cas d'indisponibilité d'une plateforme de service TV, ou pendant des évènements liés à des catastrophe naturelles, par exemple. La **figure 10** illustre la diffusion d'un contenu vidéo à un client à partir d'un drone, en cas de panne d'une plateforme de service IPTV.

On va décrire pour terminer un système mobile de recharge de batteries de drones, et de stockage de drones. Ce système a pour but d'améliorer l'autonomie des drones, lors des opérations d'intervention ou de rapatriement de drones qui se trouvent éloignés de leur base d'entretien.

Un ou plusieurs véhicules, capables de recharger les batteries des drones concernés, sont déployées à cet effet. Ces véhicules embarquent une station de chargement à laquelle au moins un drone peut s'attacher pour recharger sa batterie.

La voiture peut être commandée par un CSC en utilisant un message ACTION(). Ce message indique à une voiture l'action à entreprendre ; par exemple, il lui indique les coordonnées GPS de la zone où elle doit se rendre pour accueillir un drone, afin de charger sa batterie ou de le rapatrier à une base d'entretien de la flotte des drones.

Une fois arrivée sur la zone concernée, la voiture peut accueillir le drone. Un drone qui se « greffe » (connecte) à une voiture pour recharger ses batteries continue de préserver la continuité de services pour les passerelles qui en ont besoin (c'est-à-dire, dont l'incident est toujours en cours de résolution).

Une fois la recharge terminée, la voiture autonome libère le drone, et envoie un message de notification au serveur CSC.

L'invention peut être mise en œuvre au sein des nœuds, par exemple des passerelles résidentielles ou des relais mobiles, de réseaux de communication, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de continuité de services selon l'invention.

En effet, l'invention vise aussi un programme d'ordinateur téléchargeable depuis un réseau de communication comprenant des instructions pour l'exécution des étapes d'un procédé de continuité de services selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de continuité de services selon l'invention.

## Revendications

1. Procédé de continuité de services, comprenant une étape de détection d'une panne consistant en ce qu'au moins un service auquel une passerelle résidentielle permet normalement d'accéder n'est plus accessible ou en ce que la qualité d'au moins un service auquel une passerelle résidentielle permet normalement d'accéder est dégradée,
ledit procédé comprenant ensuite les étapes suivantes :
a) un centre de supervision (CSC) sélectionne au moins un relais mobile,
b) ledit centre de supervision (CSC) communique au relais mobile sélectionné au moins une instruction destinée à assurer la continuité dudit service,
c) ledit relais mobile exécute ladite au moins une instruction communiquée par le centre de supervision et établit une association de session avec ladite passerelle ou avec un dispositif intermédiaire, et
d) le trafic relatif audit service est redirigé vers le relais mobile.

2. Procédé de continuité de services selon la revendication 1, **caractérisé en ce que** ladite association de session est réalisée à l'aide :
- d'un identifiant de secours qui est diffusé par ledit relais mobile, et qui est écouté et reconnu par ladite passerelle résidentielle ou par ledit dispositif intermédiaire, ou
- d'un identifiant de secours qui est diffusé par ladite passerelle résidentielle ou par ledit dispositif intermédiaire, et qui est écouté et reconnu par ledit relais mobile.

3. Procédé de continuité de services selon la revendication 1 ou la revendication 2, **caractérisé en ce que**, suite à ladite étape b), ledit centre de supervision (CSC) ajuste la position géographique dudit relais mobile en fonction de la position géographique de la, ou des passerelles dont ce relais mobile assure la continuité de services.

4. Procédé de continuité de services selon l'une quelconque des revendications 1 à 3, **caractérisé en ce que** ledit relais mobile est embarqué dans un drone ou dans un véhicule autonome.

5. Relais mobile, **caractérisé en ce qu'**il comprend des moyens pour, suite à la détection d'une panne consistant **en ce qu'**au moins un service auquel une passerelle résidentielle permet normalement d'accéder n'est plus accessible ou **en ce que** la qualité d'au moins un service auquel ladite passerelle permet normalement d'accéder est dégradée :
- recevoir de la part d'un centre de supervision (CSC) au moins une instruction destinée à assurer la continuité dudit service,
- ajuster au besoin sa position géographique en fonction de la position géographique de la passerelle,
- exécuter ladite au moins une instruction reçue de la part du centre de supervision et établir une association de session avec la passerelle ou avec un dispositif intermédiaire entre lui-même et la passerelle, et
- prendre en charge le trafic relatif audit service.

6. Relais mobile selon la revendication 5, **caractérisé en ce qu'**il comprend en outre des moyens pour diffuser un identifiant de secours.

7. Relais mobile selon la revendication 5 ou la revendication 6, **caractérisé en ce qu'**il comprend en outre des moyens pour écouter et reconnaître un identifiant de secours diffusé par ladite passerelle résidentielle ou par ledit dispositif intermédiaire.

8. Relais mobile selon l'une quelconque des revendications 5 à 7, **caractérisé en ce qu'**il est embarqué dans un drone ou dans un véhicule autonome.

9. Système de continuité de services, comprenant :
- au moins une passerelle résidentielle permettant d'accéder à au moins un service ; et
- au moins un relais mobile selon l'une quelconque des revendications 5 à 8, sélectionné par un centre de supervision informé d'une détection d'une panne consistant en ce qu'au moins un dit service auquel ladite passerelle permet normalement d'accéder n'est plus accessible ou en ce que la qualité d'au moins un service auquel elle permet normalement d'accéder est dégradée ;
ladite au moins une passerelle comprenant des moyens pour, suite à la détection de ladite panne, établir une association de session avec ledit relais mobile ou avec un dispositif intermédiaire entre la passerelle et ledit relais mobile, et lui transférer le trafic relatif audit service.

10. Système de continuité de services selon la revendication 9 dans lequel ladite passerelle résidentielle comprend en outre des moyens pour diffuser un identifiant de secours.

11. Système de continuité de services selon la revendication 9 ou la revendication 10, dans lequel ladite passerelle résidentielle comprend en outre des moyens pour écouter et reconnaître un identifiant de secours diffusé par ledit relais mobile.

12. Moyen de stockage de données inamovible, ou partiellement ou totalement amovible, comportant des instructions de code de programme informatique pour l'exécution des étapes d'un procédé de continuité de services selon l'une quelconque des revendications 1 à 4.

13. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution de toutes les étapes d'un procédé de continuité de services selon l'une quelconque des revendications 1 à 4, lorsqu'il est exécuté sur un ordinateur.

## Patentansprüche

1. Dienstkontinuitätsverfahren, welches einen Schritt der Erkennung einer Störung, die darin besteht, dass wenigstens ein Dienst, auf den ein Residential Gateway normalerweise ermöglicht zuzugreifen, nicht mehr zugänglich ist, oder darin, dass die Qualität wenigstens eines Dienstes, auf den ein Residential Gateway normalerweise ermöglicht zuzugreifen, beeinträchtigt ist,
wobei das Verfahren anschließend die folgenden Schritte umfasst:
a) ein Überwachungscenter (CSC) wählt wenigstens ein mobiles Relais aus,
b) das Überwachungscenter (CSC) übermittelt dem ausgewählten mobilen Relais wenigstens eine Anweisung, die dazu bestimmt ist, die Kontinuität des Dienstes sicherzustellen,
c) das mobile Relais führt die wenigstens eine Anweisung aus, die von dem Überwachungscenter übermittelt wurde, und richtet eine Sitzungszuordnung mit dem Gateway oder mit einer Zwischeneinrichtung ein, und
d) der Verkehr, welcher den Dienst betrifft, wird zu dem mobilen Relais umgeleitet.

2. Dienstkontinuitätsverfahren nach Anspruch 1, **dadurch gekennzeichnet, dass** die Sitzungszuordnung realisiert wird mithilfe:
- einer Hilfskennung, welche von dem mobilen Relais rundgesendet wird und welche von dem Residential Gateway oder von der Zwischeneinrichtung gehört und erkannt wird, oder
- einer Hilfskennung, welche von dem Gateway oder von der Zwischeneinrichtung rundgesendet wird und welche von dem mobilen Relais gehört und erkannt wird.

3. Dienstkontinuitätsverfahren nach Anspruch 1 oder Anspruch 2, **dadurch gekennzeichnet, dass** im Anschluss an Schritt b) das Überwachungscenter (CSC) die geographische Position des mobilen Relais in Abhängigkeit von der geographischen Position des oder der Gateways, dessen oder deren Dienstkontinuität dieses mobile Relais sicherstellt, anpasst.

4. Dienstkontinuitätsverfahren nach einem der Ansprüche 1 bis 3, **dadurch gekennzeichnet, dass** das mobile Relais sich an Bord einer Drohne oder eines autonomen Fahrzeugs befindet.

5. Mobiles Relais, **dadurch gekennzeichnet, dass** es Mittel umfasst, um im Anschluss an die Erkennung einer Störung, die darin besteht, dass wenigstens ein Dienst, auf den ein Residential Gateway normalerweise ermöglicht zuzugreifen, nicht mehr zugänglich ist, oder darin, dass die Qualität wenigstens eines Dienstes, auf den das Gateway normalerweise ermöglicht zuzugreifen, beeinträchtigt ist:
- von einem Überwachungscenter (CSC) wenigstens eine Anweisung zu empfangen, die dazu bestimmt ist, die Kontinuität des Dienstes sicherzustellen,
- soweit erforderlich, seine geographische Position in Abhängigkeit von der geographischen Position des Gateways anzupassen,
- die von dem Überwachungscenter empfangene wenigstens eine Anweisung auszuführen und eine Sitzungszuordnung mit dem Gateway oder mit einer zwischen sich und dem Gateway befindlichen Zwischeneinrichtung einzurichten, und
- den Verkehr, welcher den Dienst betrifft, zu übernehmen.

6. Mobiles Relais nach Anspruch 5, **dadurch gekennzeichnet, dass** es außerdem Mittel zum Rundsenden einer Hilfskennung umfasst.

7. Mobiles Relais nach Anspruch 5 oder Anspruch 6, **dadurch gekennzeichnet, dass** es außerdem Mittel zum Hören und Erkennen einer Hilfskennung umfasst, die von dem Residential Gateway oder von der Zwischeneinrichtung rundgesendet wird.

8. Mobiles Relais nach einem der Ansprüche 5 bis 7, **dadurch gekennzeichnet, dass** es sich an Bord einer Drohne oder eines autonomen Fahrzeugs befindet.

9. Dienstkontinuitätssystem, welches umfasst:
- wenigstens ein Residential Gateway, das ermöglicht, auf wenigstens einen Dienst zuzugreifen; und
- wenigstens ein mobiles Relais nach einem der Ansprüche 5 bis 8, das von einem Überwachungscenter ausgewählt wird, das über eine Erkennung einer Störung informiert ist, die darin besteht, dass wenigstens ein solcher Dienst, auf den das Gateway normalerweise ermöglicht zuzugreifen, nicht mehr zugänglich ist, oder darin, dass die Qualität wenigstens eines Dienstes, auf den es normalerweise ermöglicht zuzugreifen, beeinträchtigt ist;
wobei das wenigstens eine Gateway Mittel umfasst, um im Anschluss an die Erkennung der Störung eine Sitzungszuordnung mit dem mobilen Relais oder mit einer Zwischeneinrichtung zwischen dem Gateway und dem mobilen Relais einzurichten und den Verkehr, welcher den Dienst betrifft, auf dieses bzw. diese zu übertragen.

10. Dienstkontinuitätssystem nach Anspruch 9, wobei das Residential Gateway außerdem Mittel zum Rundsenden einer Hilfskennung umfasst.

11. Dienstkontinuitätssystem nach Anspruch 9 oder Anspruch 10, wobei das Residential Gateway außerdem Mittel zum Hören und Erkennen einer Hilfskennung umfasst, die von dem mobilen Relais rundgesendet wird.

12. Nicht wechselbares oder teilweise oder vollständig wechselbares Datenspeichermittel, welches Programmcodeanweisungen zur Ausführung der Schritte eines Dienstkontinuitätsverfahrens nach einem der Ansprüche 1 bis 4 umfasst.

13. Computerprogramm, welches von einem Kommunikationsnetz herunterladbar und/oder auf einem computerlesbaren Medium gespeichert und/oder von einem Mikroprozessor ausführbar ist, **dadurch gekennzeichnet, dass** es Anweisungen zur Ausführung aller Schritte eines Dienstkontinuitätsverfahrens nach einem der Ansprüche 1 bis 4, wenn es auf einem Computer ausgeführt wird, umfasst.

## Claims

1. Service continuity method, comprising a step of detection of a failure consisting in that at least one service to which a residential gateway normally allows access is no longer accessible or in that the quality of at least one service to which a residential gateway normally allows access is degraded,
said method then comprising the following steps:
a) a supervision centre (CSC) selects at least one mobile relay,
b) said supervision centre (CSC) communicates to the selected mobile relay at least one instruction intended to ensure the continuity of said service,
c) said mobile relay executes said at least one instruction communicated by the supervision centre and establishes a session association with said gateway or with an intermediate device, and
d) the traffic relating to said service is redirected to the mobile relay.

2. Service continuity method according to Claim 1, **characterized in that** said session association is produced using:
- an emergency identifier which is broadcast by said mobile relay, and which is listed to and recognized by said residential gateway or by said intermediate device, or
- an emergency identifier which is broadcast by said residential gateway or by said intermediate device, and which is listened to and recognized by said mobile relay.

3. Service continuity method according to Claim 1 or Claim 2, **characterized in that**, following said step b), said supervision centre (CSC) adjusts the geographic position of said mobile relay according to the geographic position of the gateway or gateways for which this mobile relay ensures the service continuity.

4. Service continuity method according to any one of Claims 1 to 3, **characterized in that** said mobile relay is embedded in a drone or in an unmanned vehicle.

5. Mobile relay, **characterized in that** it comprises means for, following the detection of a failure consisting **in that** at least one service to which a residential gateway normally allows access is no longer accessible or **in that** the quality of at least one service to which said gateway normally allows access is degraded:
- receiving from a supervision centre (CSC) at least one instruction intended to ensure the continuity of said service,
- adjusting as necessary its geographic position according to the geographic position of the gateway,
- executing said at least one instruction received from the supervision centre and establishing a session association with the gateway or with an intermediate device between itself and the gateway, and
- taking charge of the traffic relating to said service.

6. Mobile relay according to Claim 5, **characterized in that** it further comprises means for broadcasting an emergency identifier.

7. Mobile relay according to Claim 5 or Claim 6, **characterized in that** it further comprises means for listening to and recognizing an emergency identifier broadcast by said residential gateway or by said intermediate device.

8. Mobile relay according to any one of Claims 5 to 7, **characterized in that** it is embedded in a drone or in an unmanned vehicle.

9. Service continuity system, comprising:
- at least one residential gateway allowing access to at least one service; and
- at least one mobile relay according to any one of Claims 5 to 8, selected by a supervision centre informed of a detection of a failure consisting in that at least one said service to which said gateway normally allows access is no longer accessible or in that the quality of at least one service to which it normally allows access is degraded;
said at least one gateway comprising means for, following the detection of said failure, establishing a session association with said mobile relay or with an intermediate device between the gateway and said mobile relay, and transferring to it the traffic relating to said service.

10. Service continuity system according to Claim 9, in which said residential gateway further comprises means for broadcasting an emergency identifier.

11. Service continuity system according to Claim 9 or Claim 10, in which said residential gateway further comprises means for listening to and recognizing an emergency identifier broadcast by said mobile relay.

12. Non-removable, or partially or totally removable data storage means, comprising computer program code instructions for the execution of the steps of a service continuity method according to any one of Claims 1 to 4.

13. Computer program that can be downloaded from a communication network and/or stored on a medium that can be read by computer and/or that can be executed by a microprocessor, **characterized in that** it comprises instructions for the execution of all the steps of a service continuity method according to any one of Claims 1 to 4, when it is executed on a computer.
